# EUROPÄISCHE PATENTSCHRIFT

(11) **EP 1 768 085 B1**
(45) Veröffentlichungstag und Bekanntmachung des Hinweises auf die Patenterteilung: **26.11.2008**
(21) Anmeldenummer: 06026419.9
(22) Anmeldetag: 19.02.2004
(51) Int. Cl.: G09F 19/22, G09F 27/00

(54) **Leitsystem**
Control system
Système de commande

(30) Priorität: 19.02.2003 DE 20302701 U
(43) Veröffentlichungstag der Anmeldung: 28.03.2007
(62) Teilanmeldung aus: 04712522.4
(73) Patentinhaber: Fraport Ag, 60547 Frankfurt am Main (DE)
(72) Erfinder: Higelin, Jean-Claude, 68220 Hégenheim (FR)
(74) Vertreter: Degwert, Hartmut

(56) Entgegenhaltungen:
- JP-A- 2000 268 098
- US-A1- 2002 193 973
- US-B1- 6 418 372

## Beschreibung

Die Erfindung betrifft ein Leitsystem für einen Gehbereich in Gebäuden, Gebäudekomplexen und Verkehrszonen gemäß dem Oberbegriff von Anspruch 1.

Herkömmliche Leitsysteme in Gebäudekomplexen, Fußgängerzonen und dergleichen beruhen auf der Anwendung von Hinweisschildern, die sowohl Schrift als auch Symbole tragen können. In weitläufigen Gehbereichen ist eine große Anzahl dieser Hinweisschilder erforderlich, da die Lesbarkeit mit zunehmender Entfernung abnimmt. Je größer die Anzahl von Zielorten ist, desto unübersichtlicher und verwirrender wird die Vielzahl der benötigten Hinweisschilder. In einer Umgebung, in der Zielorte ohne Umwege und ohne Zeitverlust erreicht werden müssen, kommt dem Leitsystem eine besondere Bedeutung zu. Flughäfen, die oft aus mehreren Terminals bestehen, sind ein herausragendes Beispiel für eine solche Umgebung. Bei Transit- bzw. Transferflügen müssen die Passagiere oft lange Strecken zurücklegen, um von einem Terminal zum anderen zu gelangen. Die Vermeidung von Umwegen und Zeitverlusten ist oft Voraussetzung für das Erreichen von Anschlussflügen. Die Erfahrung zeigt, dass herkömmliche Leitsysteme oft nicht oder nicht rechtzeitig erkannt oder verstanden werden. Insbesondere gibt ein auf Hinweisschildern beruhendes Leitsystem nicht jedem Passagier die erwünschte Führung, besondern in internationaler Umgebung, wenn in verschiedenen Sprachen oder gar unterschiedlichen Schriften ausgeschildert werden muß. Die an Verzweigungen erforderliche Anhäufung von Hinweisschildern verhindert ein schnelles Erkennen und Verstehen. Oft ist auch die Sicht auf Hinweisschilder versperrt. Die Folge sind Nichterkennung, Nichtbeachtung und Fehldeutung der gegebenen Hinweise bis hin zu Orientierungsfehlern, die den Passagier eine um 180° falsche Richtung einschlagen lassen.

In der US-A-2002/193973 ist ein Leitsystem in einem Flughafengebäude gezeigt, das mehrere Informationszentren aufweist, die über das Flughafengebäude verteilt sind. An den Informationszentren kann der Fluggast sowohl allgemeine als auch personen- und flugrelevante Daten mittels eines Mobiltelefons bzw. einer personalisierten elektronischen Karte abrufen.

In der JP-A-2000 268098 ist ein Leitsystem für ein Flughafengebäude gezeigt, das ein Informationsterminal umfaßt, an dem der Fluggast mittels einer personalisierten elektronischen Karte Wegeinformationen abrufen kann.

In der US-B1-6 418 372 ist ein elektronisches Leitsystem für Besucher gezeigt, bei dem der Besucher ein tragbares Gerät mitführt, in das er den von ihm gewünschten Zielort eingeben kann. Kommt der Besucher in die Nähe einer Richtungsanzeigevorrichtung, wird eine Richtungsinformation erzeugt, die dem Besucher den Weg zu dem von ihm gewünschten Zielort zeigt.

Durch die Erfindung wird ein Leitsystem für derartige Umgebungen geschaffen, das sich durch vollkommene Sichtbarkeit, Erkennbarkeit und Verfügbarkeit in jeder Zone des Gehbereichs sowie durch intuitive Verständlichkeit auszeichnet, so dass die Zielorte auf direktestem Weg und ohne Zeitverlust erreicht werden können. Bei dem erfindungsgemäßen Leitsystem sind entlang den Verkehrswegen, welche die Zielorte miteinander verbinden, zusätzlich zu den Identifikations- und Informationsstationen, an denen Benutzer anhand von mitgeführten Datenträgern wie Transpondern oder Chipkarten kontaktlos identifiziert, Benutzerdaten abgerufen und benutzerspezifische Informationen ausgegeben werden, farbige Weisungslinien mit Richtungsanzeigemerkmalen angeordnet, wobei jede Weisungslinie einem Zielort zugeordnet ist und an dem zugeordneten Zielort endet. Die Identifikations- und Informationsterminals werden an gut zugänglichen Orten aufgestellt und sind mit einem Informationssystem kombiniert, das benutzerspezifische Informationen an ausgewählten Stellen der Gebäude, Verkehrswege und Zielorte ausgibt. Die Identifizierung eines Benutzers kann anhand von elektronischen Datenträgern erfolgen. Zur Verwirklichung eines solchen Systems können bekannte Datenträger wie Chipkarten und Transponderchips verwendet werden. Letztere eignen sich zur Fernabfrage und können beispielsweise in Bordkarten integriert sein. Der in Bordkarten gespeicherte Code enthält bereits umfangreiche Informationen über den Passagier und seine Flugdaten. Wenn beispielsweise ein Transfer-Passagier sich einer Identifikationsstation nähert, können ihm akustische und/oder optische Hinweise präsentiert werden, die ihm zum Auffinden seines Zielortes nützlich sind ("Folgen Sie der blauen Weisungslinie bis zum Terminal Blau 17"), ebenso wie personenbezogene Informationen ("Bitte zu Hause anrufen"). Besonders vorteilhaft ist die direkte individuelle Information eines Passagiers in Fällen einer durch Verspätung notwendig gewordenen Umbuchung. In einem solchen Fall kann die Umbuchung automatisch erfolgen, und der Passagier erhält ohne Zeitverzug alle aktuellen Informationen über den (geänderten) Anschlussflug, einschließlich einer beruhigenden Mitteilung, dass sein Gepäck entsprechend umgeladen wurde. Durch das Leitsystem wird er dann zuverlässig zu seinem Zielort, dem neuen Flugsteig, geführt.

In Weiterbildung dieses Konzepts, das die Verwendung individueller Datenträger voraussetzt, werden die durch kontaktlose Abfrage abgerufenen individuellen Daten dazu verwendet, dem Individuum Botschaften, z.B. Werbeangebote, auf Anzeigetafeln zu präsentieren, die entlang des von Weisungslinien begleiteten Weges aufgestellt sind. Ferner kann der Passagier an Identifikationsstationen mit automatischer Datenerfassung ("Informationskiosk") einen Ausdruck der relevanten Flugdaten in seiner Landessprache abrufen, vorzugsweise in Form eines Handzettels, der darüber hinaus abtrennbare Coupons umfaßt, die ihn (und nur ihn persönlich) zum Einkauf von Waren zu Vorzugspreisen in bestimmten Geschäften berechtigen, an denen ihn die Weisungslinien vorbei oder zu ihnen hin führen, vorzugsweise Geschäfte in der Nähe des Zielortes (insbesondere des Flugsteigs), also Orte, zu denen der Anlagenbetreiber (z.B. Flughafengesellschaft) den Passagier lenken möchte.

Weitere Merkmale und Vorteile der Erfindung ergeben sich aus der folgenden Beschreibung und aus den Zeichnungen, auf die Bezug genommen wird. In den Zeichnungen zeigen:
- Figur 1 in schematischer Perspektivansicht ein Anwendungsbeispiel eines Leitsystems;
- Figur 2 eine Detailansicht des Anwendungsbeispiels mit mehreren parallelen Verkehrswegen;
- Figur 3 schematisch die Anwendung des Leitsystems im Bereich eines mehrere Zielorte verbindenden Verkehrswegs;
- Figur 4 eine Identifikationsstation, wie sie von einem Benutzer wahrgenommen wird;
- Figur 5 einen personenbezogenen Handzettel, der von der Identifikationsstation an einen Benutzer ausgegeben wird; und
- Figur 6 die schematische Darstellung eines Zielortes mit hinführenden und mit durchführenden Verkehrswegen.

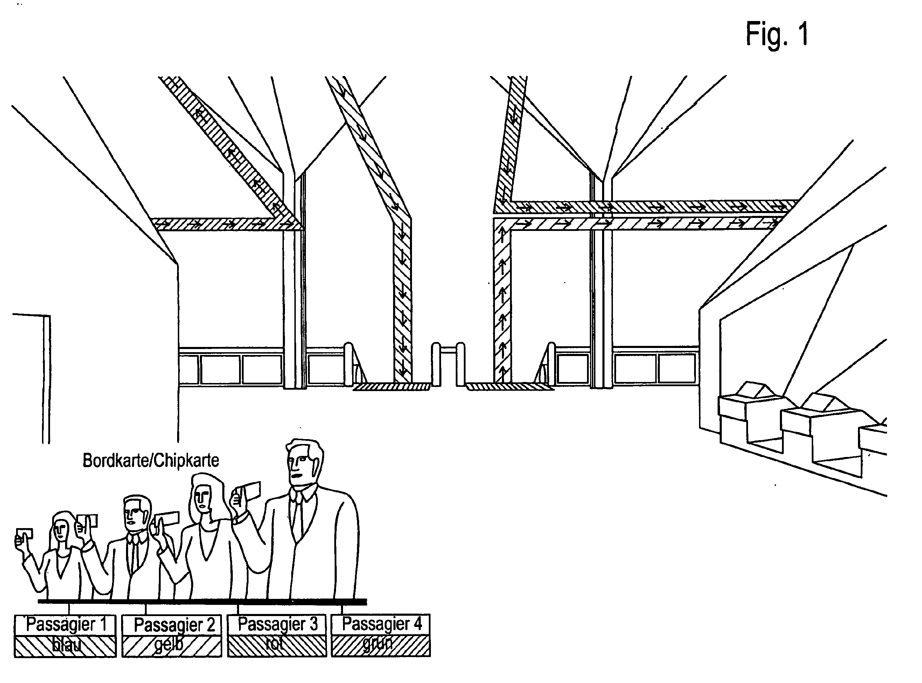

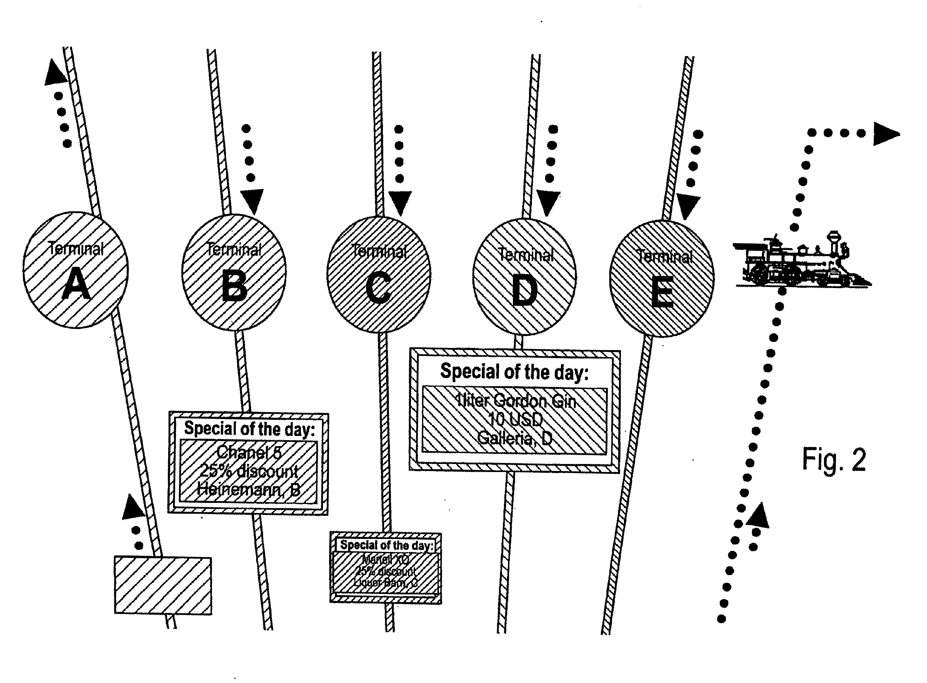

Das in Figur 1 dargestellte Szenario ist einem Flughafengebäude nachempfunden. Ein breiter Korridor endet an einer Brüstung, an der Verkehrswege nach rechts und links abzweigen und Rolltreppen nach unten führen bzw. von unten hochführen. An den Seiten des Korridors sind Check-In-Schalter, Geschäfte, Toilettenräume und dergleichen angeordnet. Verkehrswege, die zu bestimmten Zielorten führen, sind durch farbige Weisungslinien mit Richtungssymbolen bezeichnet. Diese Weisungslinien in Form von Leuchtstreifen mit Richtungsanzeige durch pulsierende Lichtmodulation oder Lauflichter sind gut wahrnehmbar im "Überkopfbereich", also hoch an Wänden oder im Deckenbereich, angeordnet. Der in Figur 1 gezeigte Bereich liegt in einem Terminal eines Flughafens und stellt einen Durchgangsbereich dar. Das in Figur 1 dargestellte Szenario zeigt zwei Rolltreppen, die an einer Brüstung enden, und vier Weisungslinien (Gelb, Grün, Blau, Rot), die bereichsweise parallel verlaufen. Eine grüne Weisungslinie kommt von links und verläuft hinter den Betrachter der Fig. 1. Eine blaue Weisungslinie kommt von hinter dem Betrachter und verläuft über die nach unten führende Rolltreppe. Eine rote Weisungslinie kommt von hinter dem Betrachter und biegt vor den Rolltreppen nach rechts ab. Eine gelbe Weisungslinie kommt von unten über die Rolltreppe und biegt sodann nach rechts (aus Sicht des Betrachters) ab. Jede Weisungslinie gehört zu einem Zielort und endet an diesem. Die zum Ziel weisende Richtung ist in Fig. 2 jeweils durch Pfeilsymbole gekennzeichnet. Diese Richtungspfeile sind aber nur symbolisch. In praktischen Ausführungen haben die Weisungslinien selbst Richtungsanzeigecharakter, der insbesondere durch sich wellenartig ausbreitende, pulsierende Lichtintensitätsmodulation, Farbmodulation oder mit Lauflichtern erzielt wird, in jedem Falle dergestalt, dass die Richtung unmissverständlich und deutlich erkennbar ist, der optische Effekt aber diskret und unaufdringlich bleibt. Die Anordnung der Weisungslinien kann variabel sein, indem beispielsweise eine Weisungslinie erst über einen Bodenbereich und dann über einen Seitenwandbereich verläuft. Die Weisungslinien können auch durch Lichtprojektion oder durch abgehängte Lichtbänder aus LED-Elementen sowie durch dynamische Leuchtstreifen an Boden verwirklicht sein.

In Fig. 2 sind fünf streckenweise parallel verlaufende Verkehrswege gezeigt, die von Weisungslinien begleitet werden und durch je eine Farbe und einen Buchstaben sowie durch Richtungssymbole bezeichnet sind. Dies sind:
- A: gelb
- B: orange
- C: grün
- D: blau
- E: rot.

Zusätzlich ist ein schwarz punktierter Verkehrsweg eingezeichnet, der mit einem Eisenbahn-Symbol markiert ist.

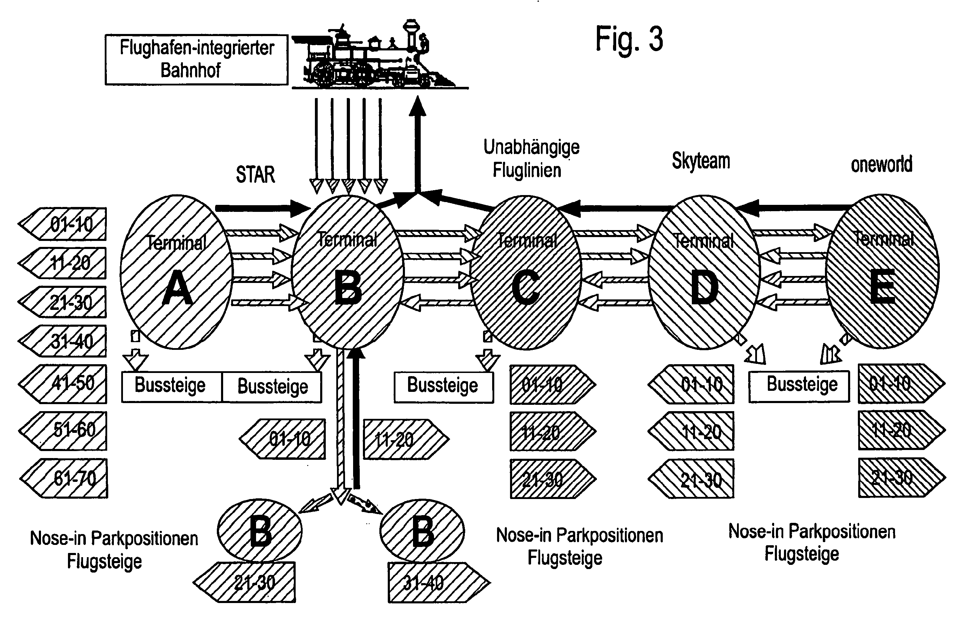

Figur 3 ist eine entsprechende schematische Übersichtsdarstellung eines Flughafens mit fünf Hauptterminals, die mit A, B, C, D und E bezeichnet sind. Jedes der Terminals A bis E stellt einen Zielort dar. Von den Terminals können Verkehrswege abzweigen, die über Verteilerzielorte zu Endzielorten, nämlich Flugsteigen, führen können, wie bei Terminal B gezeigt. Die Verkehrswege zwischen den Terminals A bis E verlaufen parallel, so dass die inneren Terminals durchquert werden müssen, um zu den äußeren zu gelangen. Alle Verkehrswege sind mit Hinweislinien ausgestattet, die an dem zugehörigen lokalen Zielort (z.B. Halle im Terminal) enden. Die Weisungslinien unterscheiden sich voneinander durch die Farbe (mit den entsprechenden Buchstaben oder Ziffern kombiniert), die der Farbe des lokalen Zielortes entspricht. Verkehrswege, die von den lokalen Zielorten abzweigen, sind mit Weisungslinien ausgestattet, die zwar dieselbe Farbe haben wie die des zugehörigen Terminals, sich aber beispielsweise in der Musterung oder Struktur unterscheiden. Bei dem in Figur 3 gezeigten Beispiel geht von dem Terminal B ein Verkehrsweg aus, an dem die Flugsteige 1 bis 10 sowie 11 bis 20 angeordnet sind und der zu einem Verteilerzielort führt, von dem zwei Verkehrswege abzweigen. Der erste dieser zwei Verkehrswege führt zu den Flugsteigen 21 bis 30 und ist durch ein Schrägstreifenmuster gekennzeichnet; der andere führt zu den Flugsteigen 31 bis 40 und ist durch eine Punktmusterung gekennzeichnet. Man sieht bei dem in Figur 3 gezeigten Beispiel, dass jede Hinweislinie an dem zugehörigen Zielort endet. Beispielsweise sind die gelben Hinweislinien, die dem Terminal A zugeordnet sind, alle mit Richtungsanzeigemerkmalen versehen, die in dieselbe Richtung weisen. Hingegen sind beispielsweise dem Terminal C Weisungslinien (Grün) zugeordnet, die von A nach B und von B nach C in einer Richtung weisen und von E nach D sowie von D nach C in der entgegengesetzten Richtung weisen. Auch in Fig. 3 sind die Richtungsanzeigemerkmale durch Pfeilsymbole angedeutet; bei praktischen Ausführungen der Weisungslinien handelt es sich jedoch vorzugsweise um Leucht- oder sonstige Anzeigeeffekte, insbesondere eine pulsierende Lichtintensitäts- oder Farbmodulation.

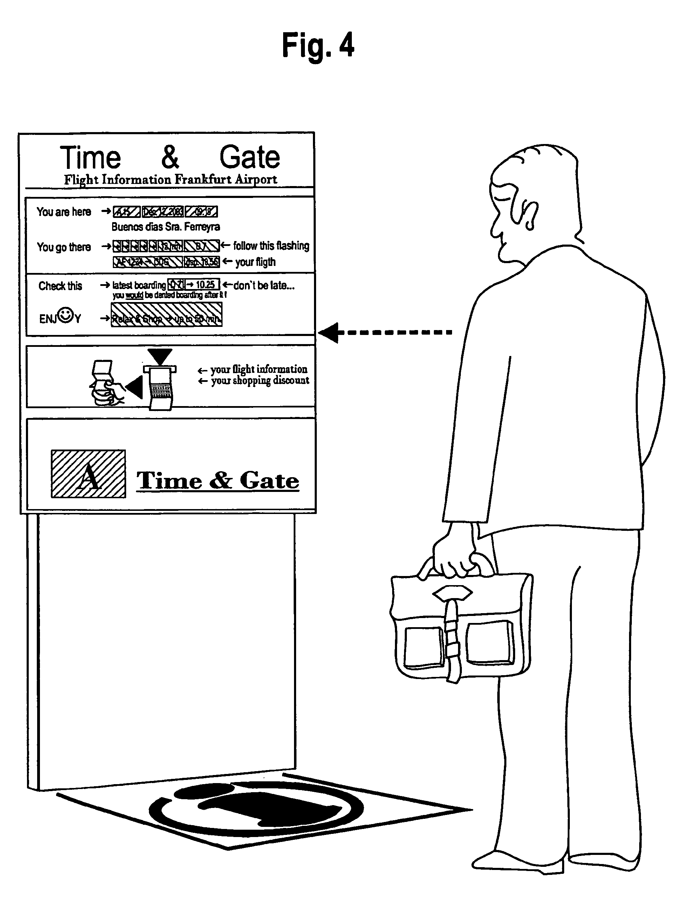

Figur 4 veranschaulicht eine Identifikations- und Informationsstation (bzw. eine automatische Datenerfassungs-Station), die Bestandteil des Leitsystems sein kann. Zahlreiche derartige Stationen können Bestandteil des Leitsystems sein und werden über die Verkehrswege, Ankunftsorte und Zielorte verteilt. Ein sich einer solchen Station nähernder Passagier kann durch Verwendung einer persönlichen Chipkarte oder durch kontaktlose Abfrage bzw. Fernabfrage anhand eines mitgeführten Transponders identifiziert werden. Geeignete Transponderchips sind bekannt; sie können beispielsweise in einer Bordkarte integriert sein. Nach Identifikation und Auswertung relevanter Daten, beispielsweise der Flugdaten und der individuellen Daten des Passagiers wie Name, Sprache usw., werden den Passagieren nützliche Informationen präsentiert, sei es auf Abruf oder auch unaufgefordert. Nützliche Informationen in diesem Zusammenhang sind insbesondere solche, die einem Transit-Passagier Auskunft über das aufzusuchende Terminal und über die voraussichtlich notwendige Zeit zum Erreichen des Zielortes geben, aber auch Informationen kommerzieller Natur, insbesondere Werbung. Da die Station auch die Nationalität eines Passagiers erkennen kann, können die Informationen optisch und/oder akustisch in der entsprechenden Landessprache ausgegeben werden.

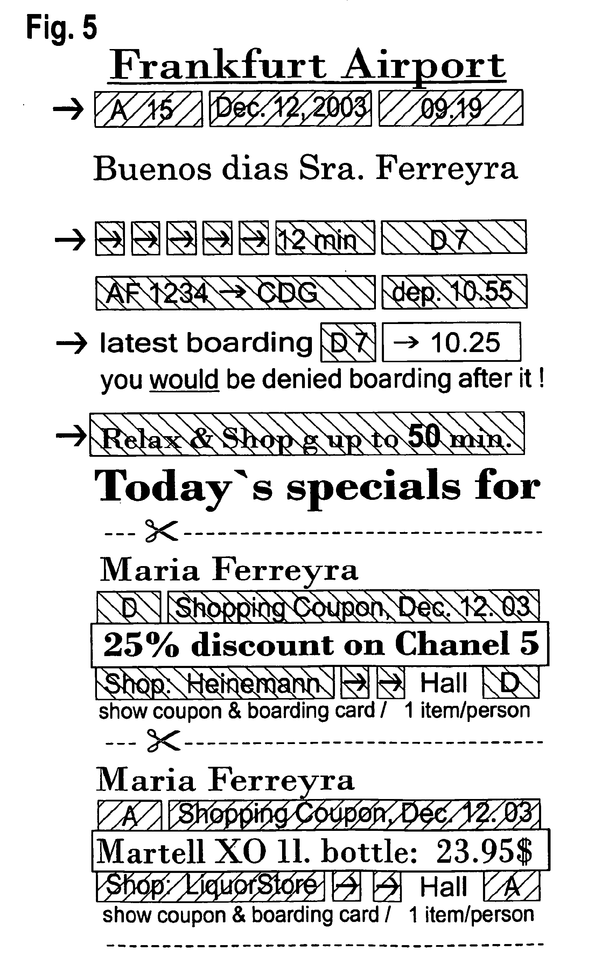

Bei der in Fig. 4 dargestellten Ausführung der Identifikationsstation mit automatischer Datenerfassung ist zusätzlich die Ausgabe eines gedruckten Handzettels vorgesehen. Auf diesem Handzettel findet der Passagier alle für seine Weiterreise oder für seinen Zielort relevanten Daten übersichtlich ausgedruckt, einschließlich einer individuellen Begrüßung. Fig. 5 zeigt ein Beispiel eines solchen Handzettels. Dieser enthält insbesondere
eine Orts- und Zeitangabe
eine individuelle Begrüßung
Flugdaten für einen Weiterflug einschließlich der Informationen zur Wegstrecke bis zum Flugsteig, der geschätzten Zeit für die Hinbegebung und der letztmöglichen Einstiegszeit (denied boarding time out).
persönliche Berechtigungsscheine in Form von abtrennbaren Coupons für den vergünstigten Einkauf bestimmter Waren in bestimmten Geschäften.

Diese Daten werden in der Landessprache des jeweiligen Benutzer ausgegeben (audio / visuell / Ausdruck).

Die persönlichen Berechtigungsscheine sind vorzugsweise auf die bekannten Präferenzen des jeweiligen Passagiers abgestimmt, die z.B. vom Herkunftsland bestimmt sein können.

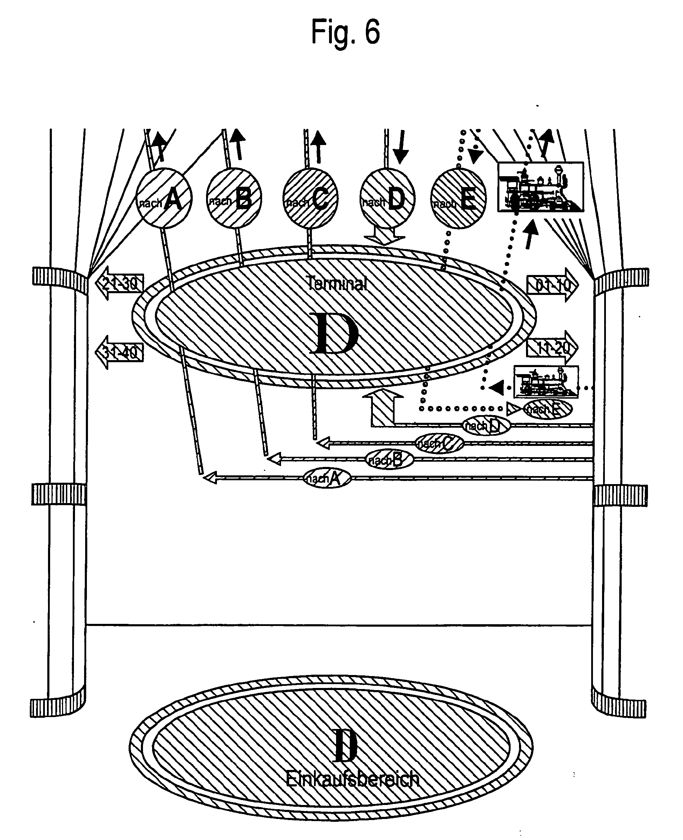

Figur 6 zeigt einen typischen Verteilerzielort, von dem verschiedene Verkehrswege zu Endzielorten abzweigen und von dem zugleich Verkehrswege zu anderen Verteilerzielorten ausgehen. In Figur 5 handelt es sich um den Verteilerzielort "D Blau", an dem der Verkehrsweg "Blau" endet. Endziele sind die Flugsteige 01 bis 10, 11 bis 20, 21 bis 30 und 31 bis 40, zu denen jeweils ein Verkehrsweg abgezweigt ist. Ein zu dem Terminal E führender Verkehrsweg (Rot) wird durch den Verteilerzielort D durchgeleitet. Gleiches kann für die zu den Terminals A, B und C führenden Verkehrswege gelten.

Die Zuordnung der Weisungslinien zu den Verkehrswegen ist nicht statisch, sondern erfolgt nach Bedarf ferngesteuert über einen zentralen Leitstand, an den die Steuereinheiten der optischen Anzeigeeinrichtungen über ein Netzwerk angeschlossen sind.

Anwendung findet das Leitsystem allgemein in öffentlichen oder nichtöffentlichen Umgebungen sowohl mit horizontaler als auch mit vertikaler Ausdehnung, also außer in Flughäfen und Bahnhöfen auch in Hochhäusern, Stadien, Parkplätzen oder Parkhäusern, Fußgängerzonen, Einkaufszentren und dgl..

## Patentansprüche

1. Leitsystem für einen Gehbereich in öffentlichen Gebäuden, Gebäudekomplexen und Verkehrszonen, die eine Mehrzahl von miteinander durch Verkehrswege verbundenen Zielorten aufweisen, wobei Identifikations- und Informationsstationen entlang den Verkehrswegen angeordnet sind, an denen Benutzer anhand von mitgeführten Datenträgern kontaktlos identifiziert, Benutzerdaten abgerufen und benutzerspezifische Informationen ausgegeben werden,
**dadurch gekennzeichnet, dass**
außerdem entlang den Verkehrswegen farbige Weisungslinien mit Richtungsanzeigemerkmalen angeordnet sind, wobei jede Weisungslinie einem Zielort zugeordnet ist und an dem zugeordneten Zielort endet.

2. Leitsystem nach Anspruch 1, **dadurch gekennzeichnet, dass** die benutzerspezifischen Informationen auf einem Handzettel ausgedruckt an den Benutzer ausgegeben werden.

3. Leitsystem nach einem der vorhergehenden Ansprüche, **dadurch gekennzeichnet, daß** die mitgeführten Datenträger Transponder oder Chipkarten sind.

4. Leitsystem nach Anspruch 3, **dadurch gekennzeichnet, dass** die Transponder in einem Flugdokument wie der Bordkarte integriert sind.

5. Leitsystem nach einem der Ansprüche 2 bis 4, **dadurch gekennzeichnet, dass** der Handzettel mit einem abtrennbaren Coupon versehen ist.

6. Leitsystem nach einem der vorstehenden Ansprüche, **dadurch gekennzeichnet, dass** entlang den Verkehrswegen Anzeigetafeln aufgestellt sind, auf denen Informationen ausgegeben werden, die in Relation zu den benutzerspezifischen Informationen stehen.

7. Leitsystem nach einem der vorstehenden Ansprüche, **gekennzeichnet durch** seine Anwendung in einem mehrere Terminal-Hallen als lokale Zielorte aufweisenden Flughafen.

8. Leitsystem nach einem der Ansprüche 1 bis 7, **gekennzeichnet durch** seine Anwendung in wenigstens einem der folgenden Fälle:
- Einkaufszentrum
- Flughafen
- Bahnhof
- Fußgängerzone
- Vergnügungspark
- Sportstadion
- Ausstellungsgelände
- Parkplatz
- Parkhaus
- Hochhaus.

## Claims

1. A guiding system for a walking zone in public buildings, complexes of buildings and traffic zones which have a plurality of destinations interconnected by traffic routes, identification and information stations being arranged along the traffic routes, where users are identified in a contact-free manner by means of data carriers carried by them, user data is polled and user-specific information is output,
**characterized in that**
colored orientation lines provided with direction indicating features are arranged along the traffic routes, each orientation line being associated with a destination and ending at the associated destination.

2. The guiding system according to claim 1, **characterized in that** the user-specific information is delivered to the user printed on a handbill.

3. The guiding system according to any of the preceding claims, **characterized in that** the carried data carriers are transponders or chip cards.

4. The guiding system according to claim 3, **characterized in that** the transponders are integrated into a flight document such as the boarding pass.

5. The guiding system according to any of claims 2 to 4, **characterized in that** the handbill is provided with a detachable coupon.

6. The guiding system according to any of the preceding claims, **characterized in that** display panels are placed along the traffic routes, which display information that is in relation to the user-specific information.

7. The guiding system according to any of the preceding claims, **characterized by** its application in an airport having a plurality of terminal halls as local destinations.

8. The guiding system according to any of claims 1 to 7, **characterized by** its application in at least one of the following cases:
- shopping center
- airport
- railway station
- pedestrian zone
- amusement park
- sports stadium
- exhibition site
- car park
- parking block
- high-rise building.

## Revendications

1. Système de guidage pour une zone de marche piétonne dans des bâtiments publics, des complexes de bâtiments et des zones de circulation qui comprennent une pluralité de destinations reliées les unes aux autres par des voies de circulation, dans lequel des stations d'identification et d'information sont disposées le long des voies de circulation, au niveau desquelles des utilisateurs peuvent être identifiés sans contact à l'aide de supports de donnés qu'ils portent sur eux, des données d'utilisateur peuvent être appelées et des informations spécifiques à l'utilisateur peuvent être fournies,
**caractérisé en ce que**
le long des voies de circulation sont en outre disposées des lignes d'orientation en couleur avec des attributs d'indication de direction, chaque ligne d'orientation étant associée à une destination et se terminant à la destination associée.

2. Système de guidage selon la revendication 1, **caractérisé en ce que** les informations spécifiques à l'utilisateur sont imprimées sur une fiche et fournies à l'utilisateur.

3. Système de guidage selon l'une des revendications précédentes, **caractérisé en ce que** les supports de données portés sur soi sont des dispositifs transpondeurs ou des cartes à puce.

4. Système de guidage selon la revendication 3, **caractérisé en ce que** les dispositifs transpondeurs sont intégrés dans un document de vol tel que la carte d'embarquement.

5. Système de guidage selon l'une des revendications 2 à 4, **caractérisé en ce que** la fiche est pourvue d'un coupon séparable.

6. Système de guidage selon l'une des revendications précédentes, **caractérisé en ce que** le long des voies de circulation sont placés des tableaux d'affichage sur lesquels sont fournies des informations qui sont en relation avec les informations spécifiques à l'utilisateur.

7. Système de guidage selon l'une des revendications précédentes, **caractérisé par** sa mise en oeuvre dans un aéroport comprenant plusieurs halls de terminal en tant que destinations locales.

8. Système de guidage selon l'une des revendications 1 à 7, **caractérisé par** sa mise en oeuvre dans au moins l'un des cas suivants :
- centre commercial
- aéroport
- gare
- zone piétonnière
- parc d'attractions
- stade
- terrain d'exposition
- parking
- parking couvert
- immeuble tour.
